# EUROPEAN PATENT SPECIFICATION

(11) **EP 3 067 140 B1**
(45) Date of publication and mention of the grant of the patent: **22.12.2021**
(21) Application number: 16159475.9
(22) Date of filing: 09.03.2016
(51) Int. Cl.: B23H 9/10, B23H 9/14, B23H 11/00, B23B 47/28

(54) **MACHINING TOOL POSITIONING TEMPLATE FOR AIRFOIL**
POSITIONIERLEHRE FÜR WERKZEUGE ZUR BEARBEITUNG VON TURBINENSCHAUFELN
GABARIT DE POSITIONNEMENT D'OUTIL D'USINAGE D'AUBE

(30) Priority: 12.03.2015 US 201514645862
(43) Date of publication of application: 14.09.2016
(73) Proprietor: General Electric Company, Schenectady, NY 12345 (US)
(72) Inventor: MOSS, Jesse Michael, Greenville, SC South Carolina 29615 (US)
(74) Representative: BRP Renaud & Partner mbB Rechtsanwälte Patentanwälte Steuerberater

(56) References cited:
- EP-A1- 2 181 792
- JP-A- H02 243 223
- US-A- 5 916 638
- US-A1- 2014 048 515
- US-B1- 6 844 518

## Description

### BACKGROUND OF THE INVENTION

The disclosure relates generally to airfoil manufacture, and more particularly, to a machining tool positioning template for an airfoil.

Airfoils are used in a wide variety of industrial machines to impart motion to a flow or extract power from a moving flow. Airfoils may be used in, for example, jet engines, gas and steam turbines, compressors, etc. Airfoils typically include very complex shapes, and thus are difficult to manufacture. Typically, airfoils are cast to approximate their desired shape and then modified by machining using a machining tool such as a drill, grinder, electric discharge machining (EDM), etc. Unfortunately, the as-cast airfoil geometry does not always match the ideal modeled part. Casting variation and part-to-part variation must be considered and often presents a difficult challenge when trying to locate features, e.g., pressure or temperature sensors, on the surfaces of the airfoil.

Conventionally, machining techniques have relied on detailed two-dimensional (2D) drawings to define the required dimensions needed to locate complex airfoil features. As an attempt to simplify, model-only definitions of airfoil features have been implemented that provide only a list of ideal machining datums with no drawings, i.e., feature x must be y millimeters from feature z and n millimeters from feature p. The model-only approach has resulted in challenges in locating the features on the airfoil. In particular, when machinists attempt to machine an airfoil to create locations for the airfoil features using the ideal machining datums from a model, the variation from cast airfoil to cast airfoil can cause the features to be incorrectly located. This can result in a significant impact to feature validation completion.

One approach to address this challenge includes scanning the airfoils, such as by blue light scanners, to ensure proper feature positioning. These scans output a point cloud of true position versus ideal position. Any variation can then be corrected within the machining model. A challenge of these scan options is the cost of the scans, and the significant amount of time associated with completing the scans and updating the machining models.

Further, US 2014/0048515 A1 discloses a template having a shape of an outer surface of a pressure side of an airfoil. The disclosed template can be repeatedly used to form a plurality of cooling passages in airfoil pressure sides by electro-discharge machining operation using a plurality of electrodes simultaneously inserted through electrode passages pre-formed in the template.

### BRIEF DESCRIPTION OF THE INVENTION

A first aspect of the disclosure as defined in claim 1 provides a template according to claim 1.

A further aspect includes a non-transitory computer readable storage medium storing code representative of a template for machining of an airfoil according to claim 11.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a side view of a template on an airfoil according to an embodiment of the invention.
FIG. 2 shows a cross-sectional view of the template and airfoil of FIG. 1.
FIG. 3 shows a perspective view of the template of FIG. 1 without the airfoil.
FIG. 4 shows a cross-sectional view of a template with an airfoil according to another embodiment of the invention.
FIG. 5 shows a side view of a template on an airfoil according to another embodiment of the invention.
FIG. 6 shows a perspective view of a template according to an embodiment of the invention.
FIG. 7 shows a perspective view of a template according to a comparative example.
FIG. 8 shows a block diagram of an additive manufacturing process including a non-transitory computer readable storage medium storing code representative of a template according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As indicated above, the disclosure provides a template for machining an airfoil. More particularly, the template acts to positively position a machining tool to machine an airfoil for positioning airfoil features such as sensors.

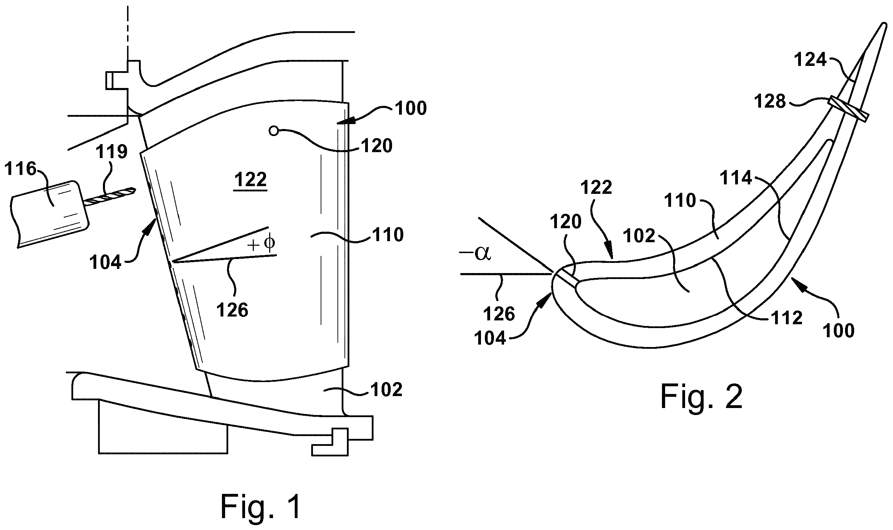

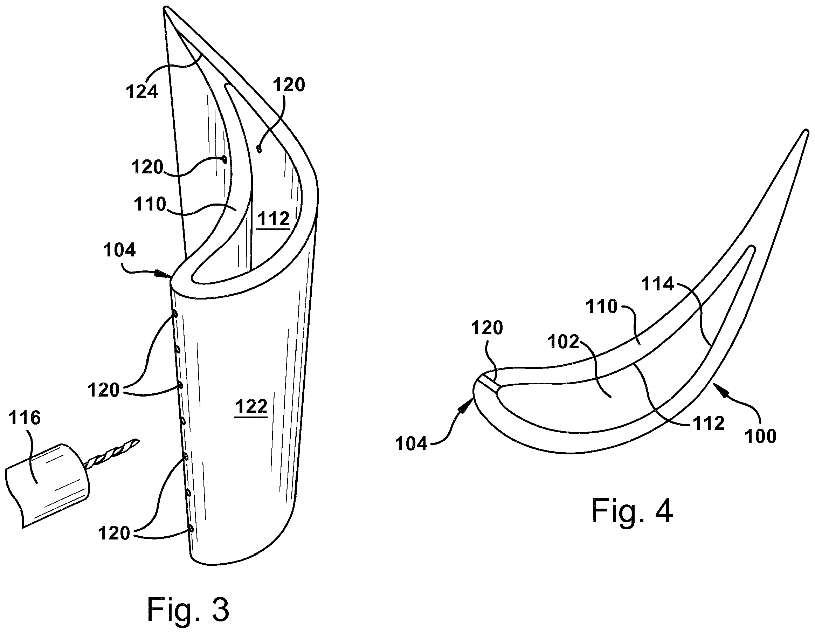

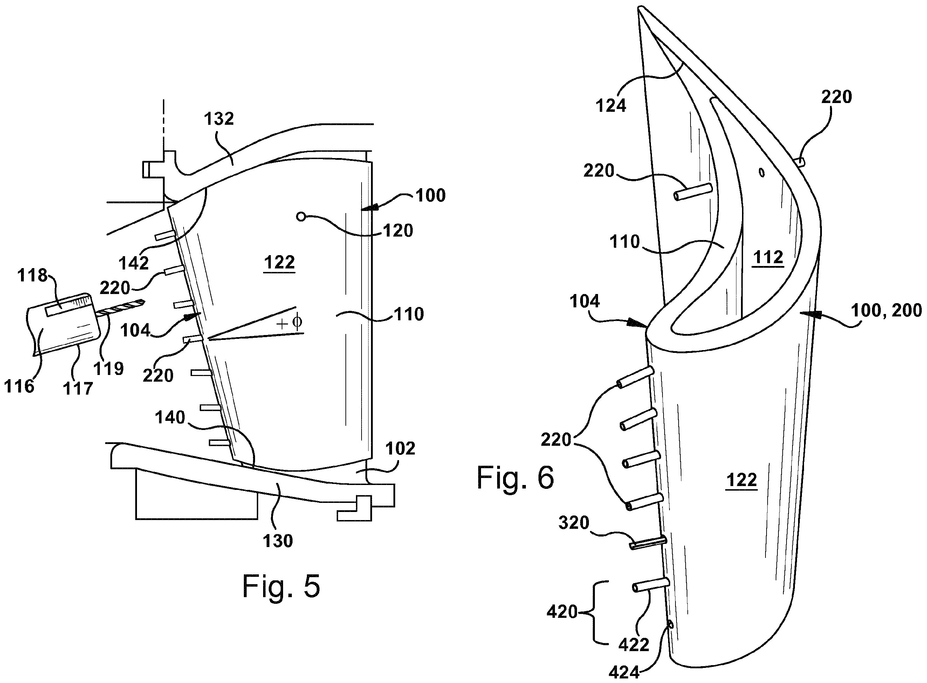

Referring to FIGS. 1-3, one embodiment of a template 100 is illustrated. FIG. 1 shows a side view of template 100 about an airfoil 102; FIG. 2 shows a cross-sectional view of template 100 about airfoil 102; and FIG. 3 shows a perspective view of template 100 without the airfoil. As shown in FIGS. 1-3, template 100 may include a body 110 having an interior surface 112 (FIGS. 2-3) shaped to substantially mate with an exterior surface 114 (FIG. 2) of at least a portion of airfoil 102. In addition, as will be described in greater detail herein, template 100 also includes at least one machining tool positioning member 120, 220 (FIG. 6), 320 (FIG. 6), 420 (FIG. 6) positioned on body 110 and configured to locate a machining tool 116 (FIGS. 1, 3, 5) for operation on airfoil 102. The positioning members are accurately positioned on body 110 such that a portion of a machining tool, e.g., a working portion 119 such as a drill bit, can engage with the members to accurately machine airfoil 102. Each positioning member is formed on body 110 to have a specific x, y, z position relative to one or more datums in a model. The datums, however, are not necessary for machining with the use of template 100.

In addition to particular x, y, z positioning, each machining tool positioning member 120 may also position a working portion of machining tool 116 at an angle(s) relative to a working fluid flow path across airfoil 102. For example, as shown in FIGS. 1 and 2, a positioning member 120 may angle the machining tool at an angle φ and angle α from, for example, an anticipated working fluid path 126. In the example illustrated, angle φ is relative to a longitudinal axis of the turbomachine in which airfoil 102 is illustratively positioned, and angle α is relative to an anticipated working fluid path 126 with airfoil 102. As understood, other angled arrangements may also be possible.

Continuing with FIGS. 1-3, details of body 110 will now be described. Body 110 is shaped to substantially mate with airfoil 102. As used herein, "substantially mate" indicates that, for the most part, interior surface 112 of body 110 is substantially parallel to and mimics exterior surface 114 of airfoil 102; however, some non-matching areas in non-critical areas where machining is not occurring and that do not otherwise impact the positioning of body 110 relative to airfoil 102 are acceptable. As shown in FIG. 1, body 110 need not cover an entire length of airfoil 102 if it can be accurately positioned without doing so. Although not necessary, body 110 may include an exterior surface 122 that substantially parallels exterior surface 114 of airfoil 102.

The body 110 is structured to allow for non-destructive re-use by including a mechanism to allow selective placement and selective removal of the body about/from airfoil 102. Hereto, a longitudinal slit 124, as shown in FIGS. 2 and 3, allowing selective placement and selective removal of the body from airfoil 102 is provided. In this fashion, template 100 can be flexibly opened and placed about one airfoil, and then flexibly opened and removed from one airfoil and used with another airfoil. Longitudinal slit 124 extends from one end of body 110 to the other end thereof, allowing separation of body 110. As shown in FIG. 2 only, one or more fasteners 128 is applied across slit 124 to retain body 110 about airfoil 102. Fastener 128 is a screw, a nut-bolt arrangement, a hook-and-latch fasteners or a latch. While ideally used repeatedly for multiple airfoils, it may be possible and desirable to use template 100 only once per airfoil. In this case, an accurate methodology to create the template about an airfoil is required, e.g., injection casting template 100 about airfoil 102. In this case, as shown in FIG. 4, a mechanism to allow non-destructive removal of body 110 such as slit 124 (FIGS. 2 and 3) may be omitted. After use, template 100 as shown in FIG. 4 may be removed and discarded.

As shown in FIG. 1, in some cases, body 110 is positioned about airfoil 102 by the substantially mating surfaces of body 110 and airfoil 102 such that body 110 can be accurately positioned for machining without interaction with other parts of airfoil 102. In this case, body 110 need not cover an entire length of airfoil 102. Referring to FIG. 5, as known in the art, many airfoils 102 include other structures at ends thereof, e.g., in a flow path (typically radially positioning). For example, in many cases, airfoils 102 include one or more endwalls 130, 132 that allow for, among other things, mounting of airfoil in, for example, a steam path flow. In the example shown, airfoil 102 is embodied as a stationary turbine nozzle and thus includes a radially inward endwall 130 and a radially outward endwall 132. Those with skill in the art will recognize that airfoil 102 may include only one endwall where used, for example, as a rotating blade. Template 100 may also include a longitudinal positioning element 140 at an end of body 110 for positioning the template relative to an endwall of airfoil 102. In the example shown, where endwalls 130, 132 are employed, longitudinal positioning element 140 engages endwall 130 to accurately position template 100 for machining. In FIG. 5, a second longitudinal positioning member 142 also engages endwall 132 to accurately position template 100 for machining. That is, a longitudinal positioning element 140, 142 is provided at each end of body 110 for positioning template 100 relative to a pair of opposing endwalls 130, 132 of airfoil 102. It is emphasized that while two longitudinal positioning members 140, 142 are illustrated, it may be sufficient to use just one longitudinal positioning element, e.g., 140. Each longitudinal positioning element 140, 142 as illustrated includes an end surface of body 110 configured to interact with endwalls 130, 132, respectively, and longitudinally position template 100 relative to airfoil 102. It is emphasized however that each element 140, 142 may include any manner of physical element that is part of body 110 or mounted thereto to directly engage a mounting structure for airfoil 102 in such a manner to accurately longitudinally position (relative to airfoil 102) template 100 for accurate airfoil feature machining using the template. As shown in FIG. 5, even with longitudinal positioning elements 140, 142, body 110 need not cover an entire length of airfoil 102 if it can be accurately positioned without doing so.

Machining tool positioning members, e.g., 120, are specifically positioned on body 110 to allow interaction with a portion of a machining tool 116 to accurately machine a particular feature into airfoil 102. The machining tool positioning members may be located anywhere on body 110, as required by the airfoil model. In one embodiment shown in most of the figures, machining tool positioning members 120 extend along a leading edge 104 of airfoil 102. However, as also illustrated, they may be positioned in a variety of alternative locations.

The type of positioning member used may vary depending, for example, on the machining tool 116 used (e.g., grinder, boring tool, etc.) and/or the portion of the machining tool (e.g., drill bit, EDM boring element, grinding head, chuck, guide, fence, etc.). Machining tool 116 has been illustrated as a drill-type boring tool. It is emphasized, however, that the type of portion interacting with the positioning members and/or type of machining tool employed may, of course, vary depending on the type of feature to be added to airfoil 102. For example, where the airfoil feature is a round sensor, machining tool 116, as illustrated, may include a boring tool such as a drill with a drill bit or an EDM machine with an EDM boring element. In this case, a round hole generated by the boring tool in airfoil 102 can seat a sensor such as a pressure or temperature sensor. In addition, the type of machining tool positioning members used on a particular template 100 need not be all the same. That is, certain types of positioning members may be used in certain locations for certain features created by a specific machining tool, and other types of positioning members used in other locations for features created with another machining tool(s). Each positioning member also need not position just one type of machining tool 116.

In one embodiment, shown in FIG. 2-4 and 7, certain machining tool positioning members 120 may include an aperture in body 110 through which a portion of a machining tool 116 may extend to machine airfoil 102. For example, where a machining tool 116 includes a drill or other form of boring tool, each positioning member 120 may include an aperture that accepts a working portion 119 (FIG. 1 and 5) of the machining tool, e.g., drill bit (shown), EDM head, etc., with sufficient tolerance to allow the working portion to pass and to accurately machine airfoil 102 where desired. In another embodiment, shown in FIG. 6, certain machining tool positioning members 220, 320, 420 may protrude from exterior surface 122 of body 110. In one embodiment, a protruding positioning member 220 may include a tubular member through which a working portion, e.g., a drill bit 119 (FIGS. 1 and 5) of a machining tool 116 may extend to machine airfoil 102. For example, where a machining tool 116 includes a drill or other form of boring tool, each positioning member 220 may include a tubular member that accepts the working portion of the machining tool, e.g., drill bit, EDM head, etc., with sufficient tolerance to allow the working portion to pass and to accurately machine airfoil 102 where desired. In another embodiment, a protruding positioning member 320 (FIG. 6) may include a cupped element for either supporting a portion of machining tool 116, e.g., a chuck 117 (FIG. 5) of a drill, or the working portion of the machining tool, e.g., a drill bit of a drill or an EDM head, etc., with sufficient tolerance to allow the working portion to accurately machine airfoil 102 where desired. In another embodiment, a protruding positioning member 420 (FIG. 6) may include a combination post and aperture. In this case, a post 422 may slidingly engage a mating guide 118 (FIG. 5 only) of a machining tool 116 and a working portion 119 (FIG. 5 only) of the machining tool can be accepted in aperture 424, e.g., a drill bit or an EDM head, etc., with sufficient tolerance to allow the working portion to accurately machine airfoil 102 where desired. Protruding positioning members 220, 320, 420 can be formed in a number of ways. For example, protruding members 220, 320, 420 may be formed as integral parts of body 110, e.g., out of plastic, or can be metal or plastic embedded in body 110 or otherwise fastened in body 110.

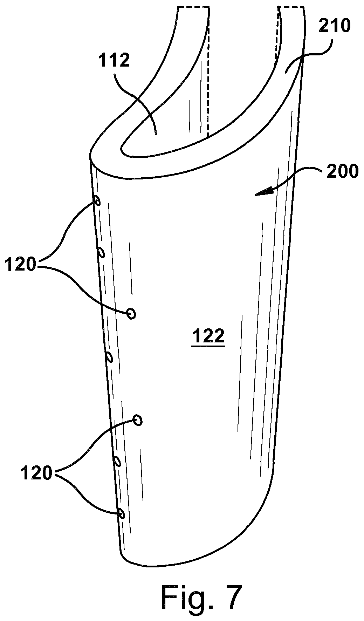

In FIGS. 1-6, body 110 is shaped to enclose an entirety of airfoil 102, i.e., axially. In a comparative example, shown in FIG. 7, where sufficient positional accuracy can be obtained, a template 200 may include a body 210 that encloses only a portion of airfoil 102.

Body 110 may be made of any flexible material capable of being positioned about airfoil 102 and readily removed therefrom. In any event, body 110 may have any thickness sufficient to maintain its shape, e.g., if made of a plastic, perhaps 1 centimeter or greater. In one embodiment, body 110 is made of a flexible plastic.

Body 110 may be formed in a number of ways. In one embodiment, body 110 may be manually formed about an ideal airfoil model (not shown) such that interior surface 112 engages and substantially mates with exterior surface 114 (FIG. 2) of airfoil 102. In this case, interior surface 112 is practically identical to exterior surface 114 (FIG. 2) of airfoil 102. In one embodiment, however, additive manufacturing is particularly suited for manufacturing body 110. As used herein, additive manufacturing (AM) may include any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of plastic, much of which is cut away and discarded, the only material used in additive manufacturing is what is required to shape the part. Additive manufacturing processes may include but are not limited to: 3D printing, rapid prototyping (RP), direct digital manufacturing (DDM), selective laser melting (SLM) and direct metal laser melting (DMLM). In the current setting, DMLM has been found advantageous.

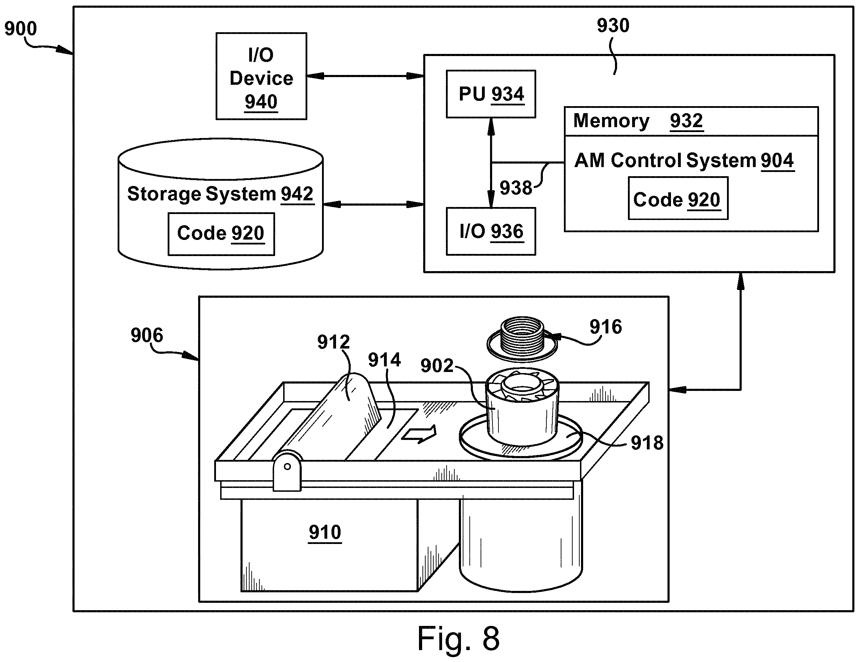

To illustrate an example of an additive manufacturing process, FIG. 8 shows a schematic/block view of an illustrative computerized additive manufacturing system 900 for generating an object 902. In this example, system 900 is arranged for DMLM. It is understood that the general teachings of the disclosure are equally applicable to other forms of additive manufacturing. Object 902 is illustrated as a double walled turbine element; however, it is understood that the additive manufacturing process can be readily adapted to manufacture template 100, 200 (FIGS. 1-7). AM system 900 generally includes a computerized additive manufacturing (AM) control system 904 and an AM printer 906. AM system 900, as will be described, executes code 920 that includes a set of computer-executable instructions defining template 100, 200 (FIGS. 1-7) to physically generate the object using AM printer 906. Each AM process may use different raw materials in the form of, for example, fine-grain powder, liquid (e.g., polymers), sheet, etc., a stock of which may be held in a chamber 910 of AM printer 906. In the instant case, template 100, 200 (FIGS. 1-7) may be made of plastic/polymers or similar materials. As illustrated, an applicator 912 may create a thin layer of raw material 914 spread out as the blank canvas from which each successive slice of the final object will be created. In other cases, applicator 912 may directly apply or print the next layer onto a previous layer as defined by code 920, e.g., where the material is a polymer. In the example shown, a laser or electron beam 916 fuses particles for each slice, as defined by code 920, but this may not be necessary where a quick setting liquid plastic/polymer is employed. Various parts of AM printer 906 may move to accommodate the addition of each new layer, e.g., a build platform 918 may lower and/or chamber 910 and/or applicator 912 may rise after each layer.

AM control system 904 is shown implemented on computer 930 as computer program code. To this extent, computer 930 is shown including a memory 932, a processor 934, an input/output (I/O) interface 936, and a bus 938. Further, computer 930 is shown in communication with an external I/O device/resource 940 and a storage system 942. In general, processor 934 executes computer program code, such as AM control system 904, that is stored in memory 932 and/or storage system 942 under instructions from code 920 representative of template 100, 200 (FIGS. 1-7), described herein. While executing computer program code, processor 934 can read and/or write data to/from memory 932, storage system 942, I/O device 940 and/or AM printer 906. Bus 938 provides a communication link between each of the components in computer 930, and I/O device 940 can comprise any device that enables a user to interact with computer 940 (e.g., keyboard, pointing device, display, etc.). Computer 930 is only representative of various possible combinations of hardware and software. For example, processor 934 may comprise a single processing unit, or be distributed across one or more processing units in one or more locations, e.g., on a client and server. Similarly, memory 932 and/or storage system 942 may reside at one or more physical locations. Memory 932 and/or storage system 942 can comprise any combination of various types of non-transitory computer readable storage medium including magnetic media, optical media, random access memory (RAM), read only memory (ROM), etc. Computer 930 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 932, storage system 942, etc.) storing code 920 representative of template 100, 200 (FIGS. 1-7). As noted, code 920 includes a set of computer-executable instructions defining outer electrode that can be used to physically generate the tip, upon execution of the code by system 900. For example, code 920 may include a precisely defined 3D model of outer electrode and can be generated from any of a large variety of well known computer aided design (CAD) software systems such as AutoCAD^{®}, TurboCAD^{®}, DesignCAD 3D Max, etc. In this regard, code 920 can take any now known or later developed file format. For example, code 920 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 920 may be translated between different formats, converted into a set of data signals and transmitted, received as a set of data signals and converted to code, stored, etc., as necessary. Code 920 may be an input to system 900 and may come from a part designer, an intellectual property (IP) provider, a design company, the operator or owner of system 900, or from other sources. In any event, AM control system 904 executes code 920, dividing template 100, 200 (FIGS. 1-7) into a series of thin slices that it assembles using AM printer 906 in successive layers of liquid, powder, sheet or other material. In the DMLM example, each layer is melted to the exact geometry defined by code 920 and fused to the preceding layer. Subsequently, the template 100, 200 (FIGS. 1-7) may be exposed to any variety of finishing processes, e.g., minor machining, sealing, polishing, assembly to other part of the igniter tip, etc.

Templates 100, 200 provide a number of advantages. For example, templates 100, 200 can be readily positioned over an airfoil for post-cast, modification machining. Templates 100, 200 remove any part-to-part variation or casting variation and will allow the features to be machined based on the true position of the airfoil, rather than the ideal datum based position. When validating airfoils, e.g., validating hardware for root cause analysis (RCA) or fleet upgrades, the positional accuracy of instrumentation and sensors is directly related to the accuracy of the data. For high gradient parts, such as nozzles and buckets, a small variation of a few thousandths of an inch can significantly impact the measurement. However, templates 100, 200 help to shorten the programming cycle and reduce the layout time for post-cast, modification machining features, and, at the same time, improve the positional accuracy of measurements.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the claims.

The embodiment was chosen and described in order to best explain the principles of the disclosure and the practical application, and to enable others of ordinary skill in the art to understand the disclosure for various embodiments with various modifications as are suited to the particular use contemplated.

## Claims

1. A template (100, 200), comprising:
a body having an interior surface (112) shaped to substantially mate with an exterior surface (114) of at least a portion of an airfoil (102) having a pressure side, a suction side, a leading edge (104) and a trailing edge; and
at least one machining tool positioning member (120, 220, 320, 420) positioned on the body and configured to locate a machining tool for operation on the airfoil (102),
**characterized in that** the body is shaped to enclose an axial entirety of the airfoil (102), wherein the body includes a longitudinal slit (124) allowing selective placement and selective removal of the body from the airfoil (102), and one or more fasteners appliable across the longitudinal slit (124) to retain the body about the airfoil (102), wherein the fasteners are screws, nut-bolt arrangements, hook-and-latch fasteners, or latches.

2. The template (100, 200) of claim 1, wherein the body has an exterior surface (122) that substantially parallels the exterior surface (114) of the airfoil (102).

3. The template (100, 200) of any of claims 1 to 2, wherein the body includes a flexible plastic.

4. The template (100, 200) of any of claims 1 to 3, wherein each machining tool positioning member (120, 220, 320, 420) includes an aperture in the body through which a portion of the machining tool extends to machine the airfoil (102).

5. The template (100, 200) of any preceding claim, wherein each machining tool positioning member (120, 220, 320, 420) includes a protruding positioning element (220, 320, 420) extending from an exterior surface (122) of the body, each protruding positioning element (220, 320, 420) configured to locate a portion of a machining tool relative to the airfoil (102).

6. The template (100, 200) of any preceding claim, further comprising a longitudinal positioning element (140) at an end of the body for positioning the template (100, 200) relative to an endwall (130) of the airfoil (102).

7. The template (100, 200) of any preceding claim, further comprising a longitudinal positioning element (140, 142) at each end of the body for positioning the template (100, 200) relative to a pair of opposing endwalls (130, 132) of the airfoil (102).

8. The template (100, 200) of any preceding claim, wherein the at least one machining tool positioning member (120, 220, 320, 420) includes a plurality of machining tool positioning members (120, 220, 320, 420).

9. The template (100, 200) of claim 8, wherein each machining tool positioning member (120, 220, 320, 420) is located along the body so as to position a portion of the machining tool relative to the leading edge (104) of the airfoil (102).

10. The template (100, 200) of any preceding claim, wherein each machining tool positioning member (120, 220, 320, 420) positions a working portion (119) of the machining tool at an angle substantially aligned with a working fluid flow path relative to the airfoil (102).

11. A non-transitory computer (930) readable storage medium storing code (920) representative of a template (100, 200) for machining of an airfoil (102), the template (100, 200) physically generated upon execution of the code (920) by a computerized additive manufacturing system, the code (920) comprising:
code (920) representing the template (100, 200) of any preceding claim.

## Patentansprüche

1. Lehre (100, 200), umfassend:
einen Körper, der eine Innenoberfläche (112) aufweist, die so geformt ist, dass sie im Wesentlichen mit einer Außenoberfläche (114) mindestens eines Abschnitts eines Schaufelblatts (102) übereinstimmt, das eine Druckseite, eine Ansaugseite, eine Vorderkante (104) und einer Hinterkante aufweist; und
mindestens ein Bearbeitungswerkzeug-Positionierelement (120, 220, 320, 420), das an dem Körper positioniert und konfiguriert ist, um ein Bearbeitungswerkzeug für den Betrieb an dem Schaufelblatt (102) zu positionieren,
**dadurch gekennzeichnet, dass** der Körper geformt ist, um eine axiale Gesamtheit des Schaufelblatts (102) zu umschließen, wobei der Körper einen Längsschlitz (124), der ein selektives Platzieren und ein selektives Entfernen des Körpers von dem Schaufelblatt (102) ermöglicht, und ein oder mehrere Befestigungsmittel einschließt, die über den Längsschlitz (124) anbringbar sind, um den Körper um das Schaufelblatt (102) zu halten, wobei die Befestigungsmittel Schrauben, Mutter-Bolzen-Anordnungen, Haken-und-Riegel-Befestigungsmittel oder Riegel sind.

2. Lehre (100, 200) nach Anspruch 1, wobei der Körper eine Außenoberfläche (122) aufweist, die im Wesentlichen parallel zu der Außenoberfläche (114) des Schaufelblatts (102) ist.

3. Lehre (100, 200) nach einem der Ansprüche 1 bis 2, wobei der Körper einen flexiblen Kunststoff einschließt.

4. Lehre (100, 200) nach einem der Ansprüche 1 bis 3, wobei jedes Bearbeitungswerkzeug-Positionierelement (120, 220, 320, 420) eine Öffnung in dem Körper einschließt, durch die sich ein Abschnitt des Bearbeitungswerkzeugs erstreckt, um das Schaufelblatt (102) zu bearbeiten.

5. Lehre (100, 200) nach einem der vorstehenden Ansprüche, wobei jedes Bearbeitungswerkzeug-Positionierelement (120, 220, 320, 420) ein vorstehendes Positionierelement (220, 320, 420) einschließt, das sich von einer Außenoberfläche (122) des Körpers erstreckt, wobei jedes vorstehende Positionierelement (220, 320, 420) konfiguriert ist, um einen Abschnitt eines Bearbeitungswerkzeugs relativ zu dem Schaufelblatt (102) zu positionieren.

6. Lehre (100, 200) nach einem der vorstehenden Ansprüche, ferner umfassend ein Längspositionierelement (140) an einem Ende des Körpers zum Positionieren der Lehre (100, 200) relativ zu einer Endwand (130) des Schaufelblatts (102).

7. Lehre (100, 200) nach einem der vorstehenden Ansprüche, ferner umfassend ein Längspositionierelement (140, 142) an jedem Ende des Körpers zum Positionieren der Lehre (100, 200) relativ zu einem Paar gegenüberliegende Endwände (130, 132) des Schaufelblatts (102).

8. Lehre (100, 200) nach einem der vorstehenden Ansprüche, wobei das mindestens eine Bearbeitungswerkzeug-Positionierelement (120, 220, 320, 420) eine Vielzahl von Bearbeitungswerkzeug-Positionierelementen (120, 220, 320, 420) einschließt.

9. Lehre (100, 200) nach Anspruch 8, wobei jedes Bearbeitungswerkzeug-Positionierelement (120, 220, 320, 420) entlang des Körpers angeordnet ist, um einen Abschnitt des Bearbeitungswerkzeugs relativ zu der Vorderkante (104) des Schaufelblatts (102) zu positionieren.

10. Lehre (100, 200) nach einem der vorstehenden Ansprüche, wobei jedes Bearbeitungswerkzeug-Positionierelement (120, 220, 320, 420) einen Arbeitsabschnitt (119) des Bearbeitungswerkzeugs in einem Winkel positioniert, der im Wesentlichen an einem Arbeitsfluidströmungsweg relativ zu dem Schaufelblatt (102) ausgerichtet ist.

11. Nichtflüchtiges, durch einen Computer (930) lesbares Speichermedium, auf dem Code (920) gespeichert ist, der eine Lehre (100, 200) zum Bearbeiten eines Schaufelblatts (102) darstellt, wobei die Lehre (100, 200) bei Ausführung des Codes (920) durch ein computerisiertes additives Fertigungssystem physisch erzeugt wird, wobei der Code (920) umfasst:
Code (920), der die Lehre (100, 200) nach einem der vorstehenden Ansprüche darstellt.

## Revendications

1. Gabarit (100, 200), comprenant :
un corps ayant une surface intérieure (112) profilée pour s'accoupler sensiblement avec une surface extérieure (114) d'au moins une partie d'un profil aérodynamique (102) ayant un côté pression, un côté aspiration, un bord d'attaque (104) et un bord de fuite ; et
au moins un organe de positionnement d'outil d'usinage (120, 220, 320, 420) positionné sur le corps et configuré pour localiser un outil d'usinage pour fonctionnement sur le profil aérodynamique (102), **caractérisé en ce que** le corps est profilé pour enfermer une entièreté axiale du profil aérodynamique (102), dans lequel le corps inclut une fente longitudinale (124) permettant une mise en place sélective et un retrait sélectif du corps par rapport au profil aérodynamique (102), et une ou plusieurs fixations pouvant être appliquées à travers la fente longitudinale (124) pour retenir le corps autour du profil aérodynamique (102), dans lequel les fixations sont des vis, des agencements à écrou-boulon, des fixations à crochet et verrou, ou des verrous.

2. Gabarit (100, 200) selon la revendication 1, dans lequel le corps a une surface extérieure (122) qui est sensiblement parallèle à la surface extérieure (114) du profil aérodynamique (102).

3. Gabarit (100, 200) selon l'une quelconque des revendications 1 à 2, dans lequel le corps inclut un plastique flexible.

4. Gabarit (100, 200) selon l'une quelconque des revendications 1 à 3, dans lequel chaque organe de positionnement d'outil d'usinage (120, 220, 320, 420) inclut une ouverture dans le corps à travers laquelle une partie de l'outil d'usinage s'étend pour usiner le profil aérodynamique (102).

5. Gabarit (100, 200) selon une quelconque revendication précédente, dans lequel chaque organe de positionnement d'outil d'usinage (120, 220, 320, 420) inclut un élément de positionnement saillant (220, 320, 420) s'étendant à partir de la surface extérieure (122) du corps, chaque élément de positionnement saillant (220, 320, 420) configuré pour localiser une partie d'un outil d'usinage par rapport au profil aérodynamique (102).

6. Gabarit (100, 200) selon une quelconque revendication précédente, comprenant en outre un élément de positionnement longitudinal (140) à une extrémité du corps pour le positionnement du gabarit (100, 200) par rapport à une paroi d'extrémité (130) du profil aérodynamique (102).

7. Gabarit (100, 200) selon une quelconque revendication précédente, comprenant en outre un élément de positionnement longitudinal (140, 142) à chaque extrémité du corps pour le positionnement du gabarit (100, 200) par rapport à une paire de parois d'extrémité opposées (130, 132) du profil aérodynamique (102).

8. Gabarit (100, 200) selon une quelconque revendication précédente, dans lequel l'au moins un organe de positionnement d'outil d'usinage (120, 220, 320, 420) inclut une pluralité d'organes de positionnement d'outil d'usinage (120, 220, 320, 420).

9. Gabarit (100, 200) selon la revendication 8, dans lequel chaque organe de positionnement d'outil d'usinage (120, 220, 320, 420) est localisé le long du corps de façon à positionner une partie de l'outil d'usinage par rapport au bord d'attaque (104) du profil aérodynamique (102).

10. Gabarit (100, 200) selon une quelconque revendication précédente, dans lequel chaque organe de positionnement d'outil d'usinage (120, 220, 320, 420) positionne une partie fonctionnelle (119) de l'outil d'usinage selon un angle sensiblement aligné avec un trajet d'écoulement de fluide de travail par rapport au profil aérodynamique (102).

11. Support de stockage non transitoire lisible par un ordinateur (930) stockant un code (920) représentatif d'un gabarit (100, 200) pour l'usinage d'un profil aérodynamique (102), le gabarit (100, 200) généré physiquement lors de l'exécution du code (920) par un système informatisé de fabrication additive, le code (920) comprenant :
un code (920) représentant le gabarit (100, 200) d'une quelconque revendication précédente.
